**Europäisches Patentamt**

**European Patent Office**

**Office européen des brevets**

(11) Veröffentlichungsnummer: **0 232 719**
**A1**

## (12) EUROPÄISCHE PATENTANMELDUNG

(21) Anmeldenummer: **87100251.5**

(22) Anmeldetag: **10.01.87**

(51) Int. Cl.4: **G01P 5/18**

(30) Priorität: **13.01.86 DE 3600679**

(43) Veröffentlichungstag der Anmeldung:
**19.08.87 Patentblatt 87/34**

(84) Benannte Vertragsstaaten:
**AT CH DE FR GB IT LI NL SE**

(71) Anmelder: **CENTRA-BÜRKLE GMBH**
**Böblinger Strasse 17**
**D-7036 Schönaich(DE)**

(72) Erfinder: **Zimmer, Werner, Dipl.-Phys.**
**Untere Halde 9**
**D-7039 Weil im Schönbuch(DE)**

(74) Vertreter: **Herzbach, Dieter et al**
**Honeywell Europe S.A. Holding KG Patent-**
**und Lizenzabteilung Kaiserleistrasse 55**
**Postfach 184**
**D-6050 Offenbach am Main(DE)**

(54) **Verfahren und Einrichtung zur Messung von Strömungsgeschwindigkeiten.**

(57) Verfahren zum Ermitteln der Strömungsgeschwindigkeit von Fluiden mittels Laufzeitmessung unter korrelativer Auswertung von in dem Fluid enthaltenen und/oder in es durch einen Sender eingebrachte Wärmeimpulsen. Zur Erhöhung der Meßgenauigkeit erstrecken sich der Sender und der oder die Empfänger bzw. die Empfänger ohne Sender kontinuierlich oder diskontinuierlich über zueinander parallelen Linien, die in Ebenen senkrecht zur Strömungsrichtung der Fluidströmung verlaufen und/oder wird bei Anwendung eines Senders dessen mittlere Pulsfrequenz für die jeweils nächste Messung der Strömungsgeschwindigkeit in Abhängigkeit von der jeweils zuletzt ermittelten Strömungsgeschwindigkeit in vorbestimmter Weise geändert.

FIG.1

## Verfahren und Einrichtung zur Messung von Strömungsgeschwindigkeiten.

Die Erfindung betrifft ein Verfahren zur Messung von Strömungsgeschwindigkeiten gemäß dem Oberbegriff des Anspruches 1 und eine Einrichtung zur Durchführung dieses Verfahrens.

Bei einer bekannten Einrichtung dieser Art (DE-OS 31 06 530) ist das den Sender beaufschlagende Signal, welches in Wärmeimpulse des Fluids, dessen Strömungsgeschwindigkeit zu messen ist, umgesetzt wird, entweder ein periodisches Signal oder ein nicht periodisches Signal. Dieses Signal wird einem variablen Zeitverzögerungsglied zugeführt, dessen Ausgangssignal einem Eingang eines Multiplizierers zugeleitet wird, dessen anderem Eingang ein vom auf die Temperatur des Fluids stromabwärts des Senders ansprechenden Empfänger geliefertes Empfängersignal zugeleitet wird. Das Ausgangssignal des Multiplizierers wird einem Integrator zugeleitet, an dessen Ausgang ein Anzeigegerät zur Ermittlung eines Extremwertes angeschlossen ist. Die dem ermittelten Extremwert zugeordnete Verzögerungszeit entspricht der Laufzeit der Wärmeimpulse vom Sender zum Empfänger und aus ihr wird die Strömungsgeschwindigkeit des Fluids berechnet.

Die bekannten korrelativen Strömungsgeschwindigkeitsmesser können Strömungsgeschwindigkeiten nur mit relativ großen Streuungen messen und haben überdies verhältnismäßig kleine Meßbereiche, die in vielen Fällen nicht ausreichend sind. Bspw. ist es bei Heizungsanlagen für Zwecke der Wärmemengenzählung oft erwünscht, die Strömungsgeschwindigkeit des Wärmeträgermediums über sehr große Meßbereiche recht genau zu ermitteln, bspw. bei Fernheizungsanlagen.

Es ist deshalb eine Aufgabe der Erfindung, ein Verfahren der im Oberbegriff des Anspruches 1 genannten Art dahingehend zu verbessern, daß es bessere Meßgenauigkeit ermöglicht und/oder auch größere Meßbereiche erreichen läßt.

Diese Aufgabe wird erfindungsgemäß durch das in Anspruch 1 angegebene Verfahren gelöst. Eine erfindungsgemäße Einrichtung zur Durchführung dieses Verfahrens ist in Anspruch 17 beschrieben.

Wenn die mittlere Pulsfrequenz des für jeweils eine Strömungsgeschwindigkeitsmessung verwendeten Sendersignales von der jeweils vorangehend gemessenen Strömungsgeschwindigkeit abhängig gemacht wird, lassen sich sehr große Meßbereiche und auch besonders gute Meßgenauigkeit erzielen. Die Meßgenauigkeit läßt sich auch durch die andere im Kennzeichen des Anspruches 1 angegebene Maßnahme verbessern. Da das Korrelationsverfahren eine statistische Auswertemethode ist, streuen die Ergebnisse an sich mehr oder weniger. Durch die Erfindung läßt sich die Streuung unter gleichzeitiger Erhöhung des Meßbereiches verringern.

Es ist möglich, mit oder ohne Sender zu arbeiten. In letzterem Falle werden stochastische Temperaturschwankungen des Fluids, die von den Empfängern gefühlt werden, korrelativ ausgewertet.

Wenn ein Sender vorhanden ist, dann stehen für die korrelative Auswertung um so mehr Empfängersignalschwankungen pro Zeiteinheit zur Verfügung, je höher die mittlere Pulsfrequenz des betreffenden Sendersignales ist. Für eine einzelne Messung der Strömungsgeschwindigkeit benötigt man Zeit. Da sich während einer einzelnen Messung die Strömungsgeschwindigkeit ändern kann, ist es erwünscht, diese für die einzelne Messung benötigte Gesamtzeit relativ kurz zu halten, auch deswegen, um in jeweils relativ kurzen Zeitabständen jeweils ein Meßergebnis erhalten zu können. Je höher nun die mittlere Pulsfrequenz des jeweils einer Strömungsgeschwindigkeitsmessung dienenden Sendersignales ist, desto mehr Senderimpulse bzw. Empfängersignalschwankungen stehen pro Zeiteinheit für die korrelative Auswertung zur Verfügung und desto kleiner kann die Streuung der ermittelten Strömungsgeschwindigkeit bei gegebener Zeitdaucr für die Durchführung und korrelative Auswertung einer Einzelmessung werden. Allerdings nehmen mit steigender mittlerer Pulsfrequenz die Amplituden der durch die Senderimpulse in das Fluid eingetragenen Wärmeimpulse wegen des Übertragungsverhaltens der Meßstrecke immer mehr ab und dies erniedrigt wiederum die Genauigkeit der korrelativen Auswertung. Es ergibt sich so bei jeder Strömungsgeschwindigkeit praktisch eine optimale mittlere Pulsfrequenz des Senders. Indem man die Frequenz der Senderimpulse in Abhängigkeit der jeweils zuletzt ermittelten Strömungsgeschwindigkeit in vorbestimmter Weise stetig oder in mindestens einer Stufe mit zunehmender Strömungsgeschwindigkeit erhöht und mit abnehmender Strömungsgeschwindigkeit wieder entsprechend erniedrigt, läßt sich hierdurch die Genauigkeit der Messung der Strömungsgeschwindigkeit erhöhen und überdies ergibt sich zusätzlich noch Erhöhung des Meßbereiches.

Diese Vergrößerung des Meßbereiches ist auf zahlreichen Gebieten erwünscht. Besonders vorteilhaft ist diese Vergrößerung des Meßbereiches auf dem Gebiet der Wärmemengenzähler für Heizungsanlagen. Hier ist ein großer Meßbereich der Strömungsgeschwindigkeit besonders günstig bei in Verbindung mit Fernheizungsanlagen eingesetzten Wärmemengenzählern und bei Auftreten von Schleichmengen des Wärmeträgermediums, die durch normale Strömungsgeschwindigkeitsmesser nicht erfaßt werden können.

Ein nach der Erfindung arbeitender Volumenstrommesser, bei dem aus der Strömungsgeschwindigkeit der Volumenstrom ermittelt und der im Versuch untersucht wurde, ergab bspw., daß er an einer üblichen Heizungsanlage noch einen Volumenstrommeßbereich von über 1 : 1000 ermöglichte. Die bisher üblichen Wärmemengenzähler haben dagegen nur Meßbereiche von höchstens zirka 1 : 50.

Bei einer Ausführungsform werden die Senderimpulse periodisch erzeugt, sei es ununterbrochen oder nur während der jeweiligen Messung. Anstatt der pro Messung der Strömungsgeschwindigkeit konstanten Pulsfrequenz kann zur Erzielung eines jeweils eindeutig der jeweiligen Strömungsgeschwindigkeit zugeordneten größten Maximums der Kreuzkorrelation auch vorgesehen sein, daß die für eine Korrelation ausgesandten Senderimpulse pseudostochastisch erzeugt werden. Oder es kann zu demselben Zweck oft auch äußerst vorteilhaft vorgesehen sein, daß das für die jeweils einzelne Strömungsgeschwindigkeitsmessung verwendete Sendersignal wie folgt vorbestimmt aufgebaut ist: Es besteht aus einer Impulsgruppe oder weist mehrere durch vorbestimmte Pausenzeiten getrennte Impulsgruppen auf, wobei die einzelne Impulsgruppe konstante Pulsfrequenz aufweisen kann und/oder ihre Impulse impulsbreiten-und/oder impulsfrequenzmoduliert sind. Dabei kann auch hier wie auch bei pseudostochastischer Erzeugung des Sendersignales vorgesehen sein, die mittlere Pulsfrequenz f des für die jeweils einselne Strömungsgeschwindigkeitsmessung erzeugten Sendersignales in Abhängigkeit der jeweils zuletzt gemessenen Strömungsgeschwindigkeit zu ändern. Die mittlere Pulsfrequenz f des einzelnen Sendersignales ist dann $f = n/\Delta t_o$ , wo $\Delta t_o$ die Zeitlänge des betreffenden Sendersignales und n die Anzahl seiner Impulse ist. Jedes vom Sender für eine einzelne Strömungsgeschwindigkeitsmessung ausgesandte Sendersignal umfaßt mehrere oder viele Impulse und kann sich bspw. über eine Zeitspanne von fünf bis hundert Sekunden erstrecken oder auch noch kürzer oder länger sein Zwischen den einzelnen, für die Messung von Strömungsgeschwindigkeiten verwendeten Sendersignalen können Sendepausen eingelegt werden oder weiterhin Sendersignale erzeugt werden, die dann jedoch nicht für korrelative Auswertung dienen, wobei in diesem Falle das einer Messung der Strömungsgeschwindigkeit dienende Sendersignal mit dem gleichzeitig aufgetretenen Empfängersignal und/oder die von zwei in Strömungsrichtung des Fluids im Abstand voneinander angeordneten Empfängern gleichzeitig empfangenen Empfängersignale korrelativ für eine einzelne Ermittlung der Strömungsgeschwindigkeit ausgewertet werden können.

Die pseudostochastische Erzeugung der Sendersignale kann bspw. mittels eines Zufallgenerators vorgenommen werden.

Ferner kann auch vorgesehen sein, sowieso vorhandene stochastische oder bewusst erzeugte pseudostochastische Temperaturschwankungen des Fluids für die Korrelation zu benutzen oder mit zu benutzen. Solche Temperaturschwankungen können bspw. durch bewusste Verstellung des die Temperatur eines Heizungsvorlauffluidums in einer Heizungsanlage verstellenden Mehrwegemischers erzeugt werden. Diese Temperaturschwankungen können für sich allein von dem oder den Empfängern gefühlt oder den von einem Sender in das Fluid eingetragenen Temperaturschwankungen überlagert werden und können die Auswertegenauigkeit erhöhen, desgleichen rein zufällig vorliegende Temperaturschwankungen des Fluids.

Solche stochastischen oder pseudostochastischen Temperaturschwankungen, die bei der Korrelation ausgewertet oder mit ausgewertet werden, können auf verschiedene Art im Fluid bewußt erzeugt werden, z.B. durch Wärmeleitungs-oder Wärmetauscherelemente, Strömungsbeimischungen oder -injektionen, Verwirbelungen usw.. Wenn solche Mittel vorgesehen sind, können sie in manchen Fällen auch den Sender bilden. Bspw. kann bei einer Heizungsanlage vorgesehen sein, daß durch rasche Verstellungen eines Mischers in das Heizungsvorlauffluid für die Korrelation ausnutzbare Wärmeimpulse eingetragen werden, wobei es genügen kann, die einzelne Korrelation mit den von zwei im Abstand hintereinander angeordneten Empfängern erhaltenen Empfängersignalen durchzuführen und die den raschen Verstellungen des Mischers entsprechenden Sendersignale für die Korrelation nicht einzusetzen.

Da das Strömungsprofil der Strömung auf die Meßgenauigkeit Einfluß hat, kann auch vorgesehen sein, daß zur Erzielung besonders günstiger Strömungsprofile auch Strömungsgleichrichter-Einbauten, wie Lochscheiben, Siebe, konzentrische Rohrstücke oder dergl. vorgesehen werden können, und zwar sowohl vor und/oder nach dem Sender und/oder zwischen den Empfängern, falls mehrere Empfänger vorgesehen sind. Hierdurch kann bspw. ein über den gesamten Querschnitt nahezu konstantes Strömungsprofil erreicht werden. Solche Strömungsgleichrichter-Einbauten sind allerdings in der Regel nur zweckmäßig, wenn ohne sie ein zu ungleichmäßiges Strömungsprofil vorliegt, z. B. keine ausreichenden Ein-und Auslaufstrecken vorgesehen werden können.

Erfindungsgemäße Einrichtungen zur Messung von Strömungsgeschwindigkeiten lassen sich ohne weiteres so herstellen, daß sie nur minimalen Druckabfall des Fluids bewirken und gegen Verschmutzung weitgehend unempfindlich sind und hohe Betriebssicherheit aufweisen.

Es ist auch möglich und in manchen Fällen zweckmäßig die Senderimpulse fortlaufend zu erzeugen. Die korrelative Auswertung kann dann so vorgenommen werden, daß jeweils während einer vorbestimmten konstanten oder von der jeweils zuletzt ermittelten Strömungsgeschwindigkeit abhängigen Zeitspanne miteinander zu korrelierende Signale gespeichert und dann aus ihnen durch korrelative Auswertung die Strömungsgeschwindigkeit ermittelt wird.

Wenn das für eine einzelne Strömungsgeschwindigkeitsmessung verwendete Sendersignal auch für die korrelative Auswertung mit eingesetzt wird, wird es auch der korrelativen Auswerteeinrichtung zugeleitet und vorzugsweise zunächst in einen Speicher dieser Auswerteeinrichtung eingespeichert, sei es unmittelbar oder nach vorangegangener Aufarbeitung. Das für jeweils eine korrelative Auswertung verwendete Sendersignal kann dem dem Sender aufgedrückten Sendersignal entsprechen oder zu ihm proportional sein oder ein Signal sein, das aus dem dem Sender aufgedrückten Sendersignal für Zwecke der Korrelation abgeleitet ist, bspw. ein gefiltertes oder sonstwie für die Korrelation aufgearbeitetes Signal ist. Für das der korrelativen Auswerteeinrichtung für jeweils eine Strömungsgeschwindigkeitsermittlung zugeleitete Empfängersignal gilt dasselbe. Es kann zweckmäßig unverändert oder nach für die Korrelation geeigneter Aufarbeitung, bspw. Filterung, gespeichert werden.

Falls die für jeweils eine korrelative Auswertung vorgesehenen Sendersignale durch in zeitlichen Abständen, die erheblich größer als der Reziprokwert der mittleren Pulsfrequenz des jeweils letzten Sendersignales sind, erzeugte Impulsgruppen gebildet werden oder enthalten, kann jedes solche Sendersignal für die korrelative Auswertung zusammen mit dem gleichzeitig aufgenommenen Empfängersignal verwendet werden.

Die Korrelation wird in an sich bekannter Weise als Kreuzkorrelation durchgeführt.

Wenn ein periodisches Sendersignal als Ausschnitt aus einer periodischen Senderimpulsfolge mit dem zugeordneten Empfängersignal oder zwei durch zwei Empfänger empfangene, durch eine periodische Senderimpulsfolge erzeugte Empfängersignale ausschnittsweise miteinander korreliert werden, kann die durch die Korrelation erhaltene Kurve mehrere gleich große Maxima aufweisen, die unterschiedlich großen Zeitverzögerungen zugeordnet sind, und die korrelative Auswerteeinrichtung kann dann nicht ohne weiteres entscheiden, welches der Maxima der tatsächlichen Laufzeit der betreffenden Wärmeimpulse vom Sender zum Empfänger und damit der Strömungsgeschwindigkeit entspricht. Dieses Verfahren ist dennoch anwendbar, wenn die Strömungsgeschwindigkeit nicht sehr stark variiert oder man sie grob schon in solchen Grenzen kennt, daß in diese Grenzen nur ein einziges Maximum fallen kann.

Um von solchen Einschränkungen unabhängig zu sein und die jeweilige Strömungsgeschwindigkeit auch bei extrem großen Meßbereichen exakt durch korrelative Auswertung der Sender-und Empfängersignale ermitteln zu können, kann die oben beschriebene Maßnahme vorgesehen sein, die für die Strömungsgeschwindigkeitsmessung verwendeten Sendersignale pseudostochastisch zu erzeugen. Zu demselben Zweck kann das für die einzelne Strömungsgeschwindigkeitsmessung eingesetzte Sendersignal auch eine oder mehrere impulsbreiten-und/oder impulsfrequenzmodulierten Impulsgruppen aufweisen, wobei im Falle mehrerer Impulsgruppen diese durch vorbestimmte Pausenzeiten getrennt sind. Oder die Impulsgruppe bzw. Impulsgruppcn können ggf. auch mit konstanter Pulsfrequenz erzeugt werden, da man auch in diesem Falle durch geeignete Maßnahmen, bspw. durch mindestens eine Sendepause innerhalb des einzelnen für eine einzelne Strömungsgeschwindigkeit eingesetzten Sendersignales und/oder durch Pausenzeiten zwischen den für Strömungsgeschwindigkeitsmessungen eingesetzten Sendersignalen erreichen kann, daß die korrelative Auswertung nur ein eindeutiges höchstes Maximum erzeugt, das der betreffenden Strömungsgeschwindigkeit eindeutig zugeordnet ist.

Wenn Pausenzeiten zwischen solchen Sendersignalen eingelegt werden, sind diese zweckmäßig wesentlich größer vorzusehen als dem Reziprokwert der mittleren Pulsfrequenz des für die vorangegangene Strömungsgeschwindigkeitsmessung verwendeten Sendersignales entspricht.

Bei dem erfindungsgemäßen Verfahren kann der mechanische Sensorteil in bekannter Weise aus einem Meßkanal, vorzugsweise einem Rohrstück, bestehen, in welchem ein Sender und mindestens ein Empfänger und/oder mindestens zwei Empfänger in Strömungsrichtung des Fluids im Abstand bzw. in Abständen hintereinander angeordnet sind. Vorzugsweise können der Sender wie auch der oder die Empfänger je ein dünnes, längliches Gebilde sein, das senkrecht zur Strömungsrichtung in das Rohrstück sich diametral ganz oder nahezu ganz durch seinen Innenraum erstreckend fest angeordnet ist. Der Sender kann ein dünner Heizdraht und der Empfänger ein dünner Draht mit temperaturabhängigem elektrischen Widerstand oder auch ein Thermoelement oder eine Thermoelementkette oder dergl. sein.

Im Betrieb wird das Fluid, bei dem es sich vorzugsweise um ein einphasiges Fluid, wie Flüssigkeit, Gas, Dampf oder auch um ein mehrphasiges Fluid, wie ein Flüssigkeit-Gasgemisch, eine siedende Flüssigkeit, eine Staub mitführende Strömung oder dergl. handeln kann, von den Senderimpulsen aufgeheizt und/oder unterliegt stochastischen Temperaturschwankungen, und die hierdurch in das Fluid eingetragenen bzw. in ihm vorhandenen Wärmeimpulse wandern mit dessen Strömungsgeschwindigkeit zu dem mindestens einen Empfänger. Die Laufzeit dieser Wärmeimpulse vom Sender zum Empfänger oder von einem Empfänger zum nächsten Empfänger wird mittels eines korrelativen Auswerteverfahrens ermittelt, vorzugsweise unter Einsatz eines Mikroprozessors. Von der Laufzeit wird auf die Strömungsgeschwindigkeit geschlossen und aus ihr kann, wenn es sich um eine ein Rohr ausfüllende Strömung handelt, auf den Volumenstrom oder Massenstrom des Fluids geschlossen werden.

Die Korrelation kann zweckmäßig über die Bestimmkung des Maximums bzw. des höchsten Maximums der Kreuzkorrelationsfunktion durchgeführt werden. Für die einzelne Kreuzkorrelation können zweckmäßig jeweils gleiche Zeitlängen aufweisende Sendersignale bzw. Empfängersignale, die zeitgleich erzeugt bzw. empfangen und gespeichert werden, verwendet werden. Auch ist es möglich, für die Kreuzkorrelation ausschließlich Empfängersignale von jeweils zwei in Strömungsrichtung in konstantem Abstand voneinander angeordneten Empfängern vorzusehen. In manchen Fällen kann dabei der Sender auch entfallen und die zu korrelierenden Empfängersignale geben dann stochastische Temperaturschwankungen des Fluids wieder, die jeweils beide betreffenden Empfänger zeitverschoben fühlen. In diesem Fall muß selbstverständlich das Fluid stochastische Temperaturschwankungen aufweisen, wie es bspw.bei Wärmeträgerfluiden in Heizungsanlagen der Fall ist.

Jede einzelne Kreuzkorrelation liefert eine Strömungsgeschwindigkeit, die der mittleren Strömungsgeschwindigkeit des Fluids während der Erzeugung bzw. Aufnahme der betreffenden, miteinander zu korrelierenden Signale entspricht.

Wie erwähnt, kann vorzugsweise vorgesehen sein, die mittlere Pulsfrequenz des einzelnen Sendersignales abhängig von der Strömungsgeschwindigkeit zu machen.

Dies sei an einem Zahlenbeispiel erläutert: Bspw. kann bei einer Strömungsgeschwindigkeit von 2 m/s die mittlere Pulsfrequenz des Sendersignales ca. 10 Hz und bei 0,2 m/s ca. 1 Hz betragen. Es kann dabei bspw. vorgesehen sein, die mittlere Pulsfrequenz stetig in Abhängigkeit der jeweils zuletzt ermittelten Strömungsgeschwindigkeit zu ändern, also folgende Gleichung für die mittlere Pulsfrequenz f anzusetzen:

$$f = c \cdot v \quad (1)$$

wo c eine Konstante und v die jeweils zuletzt ermittelte Strömungsgeschwindigkeit ist. Oder es kann stufenweise Erhöhung oder Erniedrigung der mittleren Pulsfrequenz in Abhänigkeit der jeweils zuletzt gemessenen Strömungsgeschwindigkeit vorgesehen sein. Bspw. könnte vorgesehen sein, daß anstelle der linearen Gleichung (1) eine Treppenfunktion eingesetzt wird.

Der funktionelle Zusammenhang zwischen der Pulsfrequenz und der Strömungsgeschwindigkeit kann auch nicht linear vorgesehen werden.

Die korrelative Auswerteeinrichtung kann vorzugsweise Speicher aufweisen, in die pro Messung für eine vorbestimmte Zeitdauer von bspw. 10 -20 Sekunden das Sendersignal und/oder das oder die Empfängersignale eingespeichert werden. Danach werden diese Signale in bekannter Weise zur korrelativen Auswertung zur Ermittlung des betreffenden Wertes der Strömungsgeschwindigkeit verarbeitet. Es kann dann die nächste Ermittlung der Strömungsgeschwindigkeit in gleicher Weise vorgenommen werden.

Es ist dabei auch möglich, die zeitliche Länge des jeweils für eine Strömungsgeschwindigkeitsmessung verwendeten Sendersignales ebenfalls abhängig von der Strömungsgeschwindigkeit zu machen, und zwar seine zeitliche Länge stetig oder in mindestens einer Stufe mit zunehmender Strömungsgeschwindigkeit zu verkleinern und mit abnehmender Strömungsgeschwindigkeit wieder entsprechend zu vergrößern, damit auch bei niedrigen Strömungsgeschwindigkeiten noch für gute Genauigkeit der Geschwindigkeitsmessung ausreichend große Anzahlen von Senderimpulsen für die betreffende korrelative Auswertung auftreten und bei höheren Strömungsgeschwindigkeiten die Messungen weniger Zeit benötigen. Dabei kann bspw. in manchen Fällen auch zweckmäßig vorgesehen sein, daß alle Sendersignale unabhängig von der Strömungsgeschwindigkeit jeweils gleich große Impulsanzahlen oder gleich große Zeitlängen aufweisen.

Die Meßgenauigkeit läßt sich noch weiter dadurch erhöhen, indem man das gesamte oder nahezu das gesamte Strömungsprofil des im Meßrohr strömenden Fluids möglichst gut durch den Sender und/oder Empfänger erfaßt. Dies kann vorzugsweise dadurch erfolgen, daß der Sender bzw. Empfänger so angeordnet werden, daß sie praktisch den gesamten Strömungsquerschnitt längs jeweils einer Linie kontinuierlich oder diskontinuierlich erfassen, die senkrecht zur Strömungsrichtung verläuft. Zweckmäßig ist es hierbei, wenn der Sender und der Empfänger sehr geringe Durchmesser haben, exakt positioniert sind und ihr gegen seitiger Abstand genau festliegt. Es zeigte sich bei Versuchen, daß hierdurch auch keine Meßprobleme beim Übergang der Strömung vom turbulenten in den laminaren Bereich und umgekehrt auftreten.

Wenn sich der Sender bzw. Empfänger kontinuierlich entlang der betreffenden Linie erstreckt, bedeutet dies, daß er dies, ohne unterbrochen zu sein, tut, bpsw. durch einen Draht oder ein sonstiges linienförmiges Element gebildet sein kann. Bei diskontinuierlicher Erstreckung kann der Sender bzw. Empfänger bspw. durch eine in Reihe geschaltete Kette von Heizelementen bzw. Empfängerelementen gebildet sein, bspw. durch eine Reihe von punktförmigen Heizelementen bzw. temperaturempfindlichen Elementen. Diese Elemente können bspw. Perlen aus elektrischen Widerständen (Sender) bzw. aus Perlen temperaturempfindlicher Elemente (Empfänger) gebildet sein.

Es ist nicht unbedingt notwendig, den gesamten Strömungsquerschnitt des Fluids linear mittels des betreffenden Senders bzw. Empfängers zu durchsetzen, sondern es kann in manchen Fällen auch nur ein Teil des Strömungsquerschnittes entlang einer Linie erfaßt werden. Bspw. kann es in vielen Fällen ausreichend sein, eine Hälfte des Strömungsquerschnittes durch den sich dabei radial erstreckenden Sender bzw. Empfänger zu durchsetzen, der dann entlang einer Radiuslinie dieses Querschnittes-hierdurch das Strömungsprofil der Strömung entlang dieser Radiuslinie erfassendverläuft.

Auch ist es möglich, den vorzugsweise durch ein linienförmiges Heizelement gebildeten Sender so auszubilden und anzuordnen, daß er eine selbsttätig korrigierende Gewichtung der Beheizung über einen Querschnitt des Strömungsprofiles durchführt, indem er die größeren Abstand von der Langsmitte des die Strömung führenden Rohres aufweisende Stromfäden der Randschichten stärker erwärmt als die schneller strömenden zentralen Stromfäden und damit am ebenfalls linienförmigen Empfänger eine besser ausgleichende Mittelung der Temperatur des Fluids erreicht wird. Zu diesem Zweck kann das Heizelement des Senders, wenn es sich vom Rand der Strömung bis zu deren Mitte erstreckt, über seine Länge konstante Heizleistung aufweisen, da dann die langsameren Stromfäden, die nahe der Rohrwandung des Rohres verlaufen, pro Volumeneinheit mehr Heizleistung empfangen und damit stärker aufgeheizt werden als die rascher strömenden zentralen Stromfäden. Dieser Effekt kann noch dadurch verstärkt werden, indem man dem Sender über seine Länge unterschiedliche Heizleistung gibt, bspw. durch entsprechend unterschiedliche Durchmesser eines ihn bildenden Heizdrahtes und damit unterschiedlichen elektrischen Widerstand über seine Länge.

Durch diese unterschiedliche Temperierung der unterschiedlich schnellen Stromfäden wird den durch sie repräsentierten, unterschiedlich großen Bereichen des Strömungsquerschnittes (die langsameren Stromfäden sind infolge ihrer größeren Randnähe für größere Querschnittsbereiche repräsentativ als die weiter innen liegenden - schnelleren Stromfäden) besser Rechnung getragen und dadurch bei der Bildung der Kreuzkorrelationsfunktion eine bessere Mittelung über das Strömungsprofil und höhere Meßgenauigkeit erreicht.

Es können oft vorteilhaft mehrere Empfänger in Strömungsrichtung des Fluids in Abständen hintereinander angeordnet sein und die Auswertung durch Korrelation dann z. Bsp. wie folgt vorgesehen sein: Es werden während einer vorbestimmten Zeitdauer sowohl das betreffende Sendersignal als auch die Empfängersignale gespeichert. Man kann dann bspw. mit zwei Empfängern insgesamt drei voneinander unabhängige Korrelationen zur Ermittlung der betreffenden Strömungsgeschwindigkeit durchführen, namlich eine Korrelation zwischen dem Sendersignal und dem einen Empfängersignal, eine zweite Korrelation zwischen dem Sendersignal und dem anderen Empfängersignal und eine dritte Korrelation zwischen den beiden Empfängersignalen und aus den sich hierbei ergebenden drei Strömungsgeschwindigkeitswerten kann man dann den Mittelwert als die genauere Strömungsgeschwindigkeit bilden oder man kann in manchen Fällen auch nur die Empfängersignale korrelieren, wenn das Sendersignal für die Korrelation nicht eingesetzt werden soll oder gar nicht einsetzbar oder nicht vorhanden ist.

In der Zeichnung sind Ausführungsbeispiele der Erfindung dargestellt. Es zeigen:

Fig. 1 ein Meßrohr mit einer zugeordneten korrelativen Auswerteeinrichtung zur Ermittlung der Strömungsgeschwindigkeit gemäß einem Ausführungsbeispiel der Erfindung,

Fig. 2 einen linearen Temperaturfühler gemäß einem Ausführungsbeispiel der Erfindung,

Fig. 3-6 Beispiele von Sendersignalen.

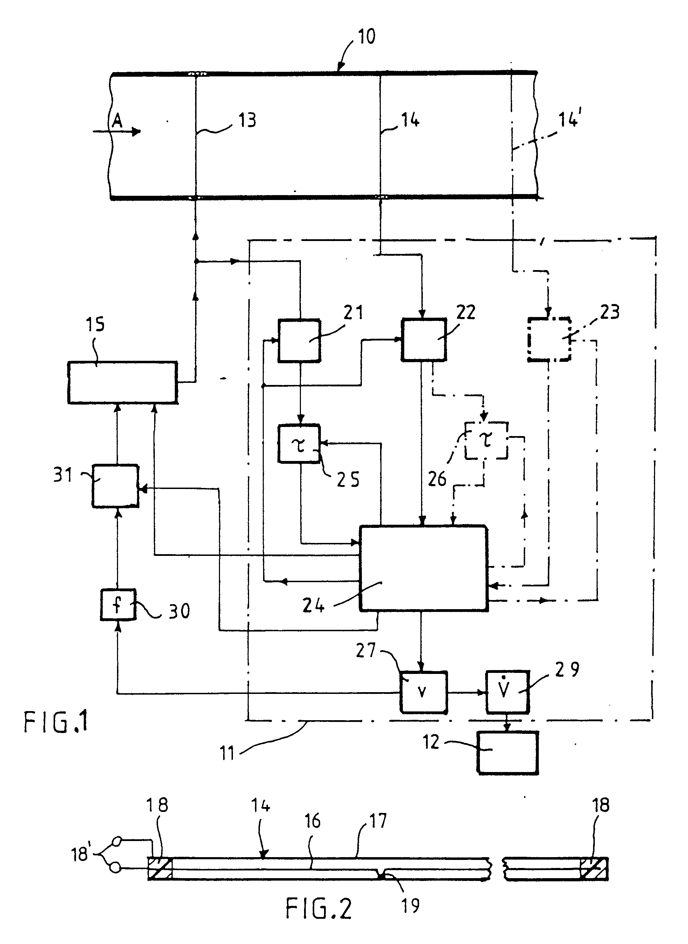

In dem Ausführungsbeispiel nach Fig. 1 kann das gerade Meßrohr 10 ein Abschnitt eines Leitungsrohres einer Heizung oder dergl. sein, in welchem ein Fluid in Richtung des Pfeiles A strömt, dessen Strömungsgeschwindigkeit v und Volumenstrom $\dot{V}$ mittels der als Blockbild dargestellten korrelativen Meßeinrichtung zu ermitteln ist. Das Meßrohr 10 hat vorzugsweise kreisrunden lichten, über die Länge der Meßstrecke konstanten Querschnitt. Doch kann das Meßrohr 10 ggfs. auch unrunden Querschnitt, bspw. rechteckigen oder ovalen Querschnitt aufweisen.

Diese Meßeinrichtung weist eine korrelative Auswerteeinrichtung 11 auf.

Bevorzugt kann der Volumenstrom $\dot{V}$ einem Wärmemengenzähler 12 für Heizungsanlagen zur Wärmemengenzählung eingegeben werden, doch sind für diese Meßeinrichtung auch viele andere Anwendungsgebiete, bpsw. in der chemischen Verfahrensindustrie und dergl. möglich.

In dem Meßrohr 10 sind als Sender 13 ein lineares Heizelement und stromabwärts von ihm und parallel zu ihm als Empfänger 14 ein linearer Temperaturfühler angeordnet. Beide sind durch dünne, gerade Drähte gebildet, die im Innenraum des Rohres 10 diametral und parallel zueinander angeordnet sind. Der Sender 13 ist ein dünner Heizdraht, der sich senkrecht zur Längsrichtung des Rohres 10 durch dieses hindurch erstreckt und durch eine dünne Isolation elektrisch gegenüber dem Fluid isoliert ist. Der Empfänger 14 ist ebenfalls ein dünner, elektrisch gegen das Fluid isolierter Draht mit temperaturabhängigem Widerstand oder ein lineares Thermoelement gemäß Fig. 2. Diese beiden Elemente 13,14 haben kleine Zeitkonstanten und erstrecken sich über den gesamten Rohrquerschnitt und sind fest eingespannt, so daß sich der Abstand zwischen ihnen nicht ändert und die durch sie gebildete Meßstrecke konstant bleibt.

Diese elektrische Meßeinrichtung läßt ungewöhnlich gute Meßgenauigkeit in der Größenordnung von bspw. ± 1 % erreichen, wozu sowohl die Verstellung der mittleren Pulsfrequenz eines Signalgenerators 15 in Abhängigkeit von v als auch die dargestellte Erfassung repräsentativer Strömungsprofile der Fluidströmung durch die dargestellte Anordnung und beschriebene Ausbildung des Senders 13 und des Empfängers 14 beiträgt. In diesem Ausführungsbeispiel sind zu letzterem Zweck das Heizelement 13 und der Temperaturfühler 14 als dünne, gerade Drähte ausgebildet, die infolge ihrer jeweils diametralen Erstreckung durch den Innenraum des Rohres 10 hindurch das gesamte Strömungsprofil des im Meßrohr 10 strömenden Fluids jeweils linienförmig gut erfassen. Dies geschieht hier also, indem das Heizelement 13 und der Temperaturfühler 14 so ausgebildet und angeordnet sind, daß ganz oder nahezu ganz das gesamte Strömungsprofil des strömenden Fluids längs jeweils einer dünnen, die Strömung nicht störenden Linie erfaßt wird, die senkrecht zur Strömungsrichtung verläuft und eine Symmetrielinie des betreffenden lichten Querschnittes des Meßrohres 10 ist. Zweckmäßig ist hierbei, wenn das Heizelement 13 und der Temperaturfühler 14 möglichst geringe Durchmesser haben, exakt positioniert sind und ihr gegenseitiger Abstand genau festliegt.

Zur Erfassung eines repräsentativen Strömungsquerschnittes ist es nicht unbedingt notwendig, den gesamten oder nahezu den gesamten Strömungsquerschnitt linear mittels des betreffenden Heizelementes 13 bzw. Temperaturfühlers 14 zu durchdringen, sondern es kann hierzu ggf. auch genügen, das Heizelement bzw. den Temperaturfühler anders anzuordnen oder kürzer auszubilden, bspw. zweckmäßig in Art eines Radiusstrahles des betreffenden lichten Querschnittes des Rohres 10 anzuordnen. Doch ist die dargestellte diametrale lineare Anordnung von Sender 13 und Empfänger 14 ganz besonders günstig. Wenn Sender 13 und Empfänger 14 sich nur über Abschnitte der betreffenden Rohrinnendurchmesser erstrecken, können sie vorzugsweise gleich lang und in Rohrlängsrichtung miteinander fluchtend angeordnet sein. Sender 13 und Empfänger 14 können ggf. auch unterschiedlich lang, vorzugsweise der Sender länger als der Empfänger sein und sich auch über sonstige, Stromfäden unterschiedlicher Geschwindigkeit repräsentativ erfassende Abschnitte der betreffenden Querschnitte erstrecken.

Als Temperaturfühler eignet sich temperaturabhängiger Widerstandsdraht, jedoch auch andere Temperaturfühler, vorzugsweise ein linienförmiges Thermoelement. Dieses kann z.B. gemäß Fig. 2 wie folgt ausgebildet sein: Der eine Werkstoff bildet einen nach außen elektrisch isolierten sehr dünnen Draht 16 und der andere Werkstoff bildet ein gerades Kapillarrohr 17, in das der Draht 16 eingesetzt und durch Stopfen 18 gehalten ist, wobei der Draht 16 an mindestens einer geeigneten Stelle 19 mit dem Kapillarrohr punktverschweißt ist, bspw. zweckmäßig in dessen Längsmitte. Die Längswärmeleitung der aus Metallen bestehenden und damit gut wärmeleitenden Teile 16, 17 bewirkt so eine linienförmige Temperaturmessung der mittleren Fluid temperatur über den Durchmesser ihres Strömungsprofiles. Da für die Korrelation nur Temperaturschwankungen interessieren, ist es nicht erforderlich, die beiden externen Anschlußklemmen 18' des Thermoelementes 14 auf konstanter Temperatur zu halten. Die beiden Werkstoffe des Thermoelementes 14 können zweckmäßig Kupfer (vorzugsweise für das Kapillarrohr) und Konstantan sein. Es kommen auch andere Werkstoffe infrage.

Der Sender 13 und der Empfänger 14 können zweckmäßig so dünn ausgebildet sein, daß sie die Strömung praktisch nicht beeinflussen.

Auch ergibt das linienförmige Heizelement 13 eine selbsttätig korrigierende Gewichtung über den Querschnitt des Strömungsprofiles, indem es die größeren Abstand von der Längsmitte des durchströmten Rohres 10 aufweisenden langsameren Stromfäden der Randschichten der Strömung stärker erwärmt als die schneller strömenden zentralen Stromfäden und damit am Empfänger 14 eine besser ausgleichende Mittelung der Wärmeimpulse erreicht wird. Zu diesem Zweck kann das Heizelement 13 über seine Länge konstante Heizleistung haben, da dann die langsameren Stromfäden, die nahe der Rohrwandung des Rohres verlaufen, pro Volumeneinheit mehr Heizenergie empfangen und damit stärker aufgeheizt werden als die rascher strömenden Stromfäden. Dieser Effekt kann noch dadurch weiter erhöht oder abgeschwächt werden, indem dem Heizdraht über seine Länge unterschiedliche Heizleistung gegeben wird durch entsprechend unterschiedliche Durchmesser.

Durch diese unterschiedliche Temperierung der unterschiedlich schnellen Stromfäden verursachen die langsameren Stromfäden am Temperaturfühlerelement größere Signalamplituden und tragen bei der Bildung der Kreuzkorrelationsfunktion korrigierend zur besseren Mittelung über das Strömungsprofil , wie bereits oben erwähnt, bei.

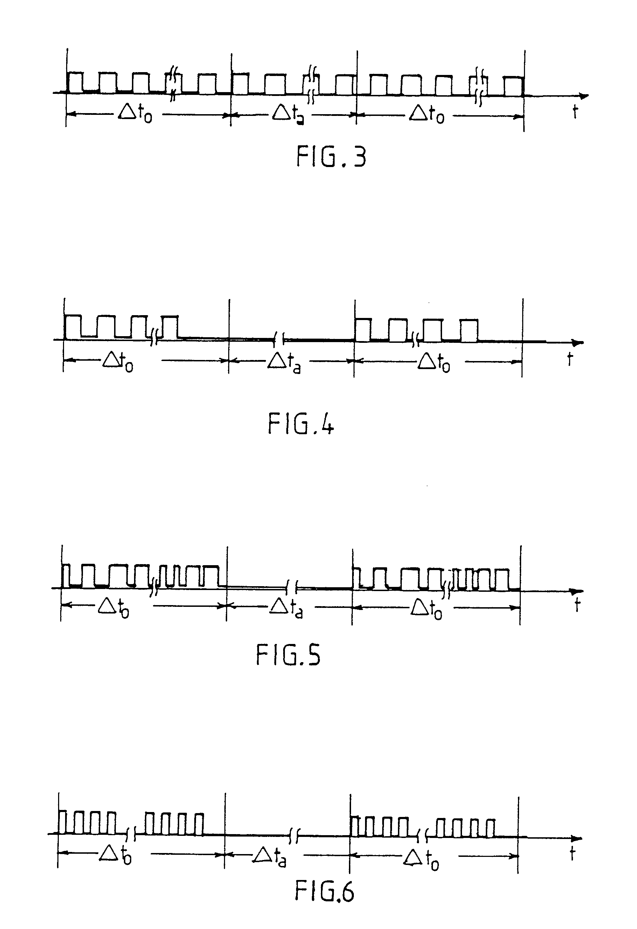

Der nach außen elektrisch isolierte Heizdraht 13 wird von dem Signalgenerator 15 mit z. Bsp. Rechteckimpulsen konstanter Spannung und Stromstärke gespeist, die mittels eines diesen Signalgenerator 15 ansteuernden Funktionsgenerators 31 impulsfrequenz-und/oder impulsbreitenmoduliert werden können. Der Funktionsgenerator 31 kann durch eine Uhr des Mikroprozessors 24 auch zum Einlegen von Pausenzeiten des Signalgenerators 15 angesteuert werden, um die für Strömungsgeschwindigkeitsmessungen verwendeten Sendersignale durch Pausenzeiten zu trennen, die wesentlich größer sind als der Reziprokwert der mittleren Pulsfrequenz des jeweils zuletzt erzeugten Sendersignales. Es ist auch möglich, vorzusehen, daß das einzelne Sendersignal konstante Pulsfrequenz oder mehrere durch programmierte Zeitabstände getrennte Impulsgruppen konstanter oder impulsbreiten-und/oder impulsfrequenzmodulierter Pulsfrequenz aufweist. In den Fig. 3 bis 6 sind solche Sendersignale an Beispielen dargestellt. Das Sendersignal für eine einzelne Strömungsgeschwindigkeitsmessung wird jeweils während der Zeitdauer $\Delta t_o$ erzeugt. Aufeinanderfolgende Sendersignale sind jeweils durch eine Zeitspanne $\Delta t_a$ getrennt. $\Delta t_a$ kann konstant sein oder auch in Abhängigkeit der jeweils zuletzt gemessenen Strömungsgeschwindigkeit veränderlich vorgesehen sein. Die Zeitlängen $\Delta t_o$ können gleich groß sein oder ebenfalls in Abhängigkeit der jeweils zuletzt ermittelten Strömungsgeschwindigkeit getroffen werden.

Bei dem Diagramm nach Fig. 3 erzeugt der Signalgenerator 15 ununterbrochen Impulse mit konstanter Pulsfrequenz.

Im Ausführungsbeispiel nach Fig. 4 wird während jeder Zeitlänge $\Delta t_o$ eine Impulsgruppe konstanter Frequenz erzeugt, die jedoch bereits vor Ende dieser Zeitlänge beendet wird und diese Pausenzeit erstreckt sich noch über die jeweils anschließende Zeitspanne $\Delta t_a$.

Im Ausführungsbeispiel nach Fig. 5 wird während jeder Zeitlänge $\Delta t_o$ durchgehend eine impulsbreiten-und impulsfrequenzmodulierte Impulsgruppe in vorbestimmter Weise erzeugt. Während der Zeitspanne $\Delta t_a$ liegen Sendepausen vor, doch kann ggfs. vorgesehen sein, daß auch während der Zeitspannen $\Delta t_a$ weiterhin Impulse erzeugt werden, bspw. ebenfalls in vorbestimmter Weise impulsbreiten-und/oder impulsfrequenzmodulierte Impulse.

In den Diagrammen ist mit t die Zeitachse bezeichnet. Im Diagramm nach Fig. 6 werden während jeder Zeitlänge $\Delta t_o$ in vorbestimmter Weise mehrere Impulsgruppen mit konstanter Pulsfrequenz erzeugt, die durch Pausenzeiten getrennt sind, jedoch kann man auch hier vorsehen, daß die einzelnen Impulsgruppen impulsbreiten und/oder impulsfrequenzmoduliert sind.

Die mittlere Pulsfrequenz des einzelnen Sendersignales der Zeitdauer $\Delta t_o$ kann bspw. zwischen 0,1 und 100 Hz, vorzugsweise zwischen ungefähr 1 und 10 Hz verstellbar sein. Hierdurch werden in das in dem Rohr 10 strömende Fluid durch den Heizdraht 13 Wärmeimpulse eingetragen, die mit dessen Strömungsgeschwindigkeit zum Empfänger 14 und einem strichpunktiert eingezeichneten zweiten Empfänger 14' wandern, wo sie von diesen Temperaturlö fühler bildenden Empfängern 14, 14' gefühlt werden.

Jedes Sendersignal der Zeitlänge $\Delta t_o$ des Signalgenerators 15 und die hierzu gleichzeitig auftretenden Ausgangssignale der Empfänger 14 bzw. 14' können in Speichern 21, 22, 23 zeitweise gespeichert werden, die Speicher des Mikroprozessors 24 sind. Dem Speicher 21 ist ein Zeitverzögerungsglied 25 mit durch den Mikroprozessor 24 verstellbarer Verzögerungszeit nachgeschaltet. Der Ausgang dieses Zeitverzögerungsgliedes 25 wird dem Mikroprozessor 24 aufgedrückt, der einen Korrelator aufweist, der in bekannter Weise das Maximum bzw. das größte Maximum der Kreuzkorrelationsfunktion bildet, und zwar der Kreuzkorrelationsfunktion zwischen den jeweils im Speicher 21 und 22 gespeicherten Signalen. Falls der Empfänger 14' vorhanden ist, kann er auch das im Speicher 23 jeweils gespeicherte Signal mit dem bzw. den in dem bzw. den Speichern 21, 22 jeweils gespeicherten Signalen korrelieren, wozu für die Korrelation mit dem im Speicher 22 jeweils gespeicherten Signal auch diesem Speicher 22 ein vom Mikroprozessor 24 angesteuertes Zeitverzögerungsglied 26 mit verstellbarer Zeitverzögerung zugeordnet ist, das also nur dann vorhanden ist, falls der Empfänger 14' vorhanden ist.

Der Mikroprozessor 24 ermittelt das Maximum bzw. das höchste Maximum der von der Verzögerungszeit abhängigen Kreuzkorrelationsfunktion und die Verzögerungszeit, bei der dieses Maximum ermittelt wird, entspricht dann der Laufzeit $\Delta t_z$ der Wärmeimpulse vom Sender 13 zum Empfänger 14, bzw. bei Einsatz des Empfängers 14' der Laufzeit vom Sender 13 bzw. des Empfängers 14 zum Empfänger 14'. Im weiteren wird nicht mehr auf den strichpunktierten Teil der Schaltung Bezug genommen, er kann, aber braucht nicht vorhanden zu sein.

Im weiteren wird also angenommen, daß der Empfänger 14 der einzige Empfänger sei. Da der Abstand zwischen dem Sender 13 und dem Empfänger 14 bekannt ist und die Meßstrecke der Länge s bildet, ist dann die Strömungsgeschwindigkeit $v = s/\Delta t_z$, die im Rechner 27 gebildet wird. Wenn das Meßrohr 10 voll mit Fluid gefüllt ist, ist die Strömungsgeschwindigkeit proportional zum Volumenstrom $\dot{V}$ des Fluids und dieser Volumenstrom $\dot{V}$ kann im Rechner 29 aus v berechnet und bspw. direkt als eine der Eingangsgrößen dem Wärmemengenzähler 12 eingegeben werden, wo dieser Volumenstrom mit der Temperaturdifferenz zwischen Vor- und Rücklauf einer Heizungsanlage zur Wärmemengenzählung multipliziert wird.

Die jeweilige mittlere Pulsfrequenz f von der von dem Signalgenerator 15 aussendbaren je einer Strömungsgeschwindigkeitsmessung dienenden Sendersignalen ist mittels eines vom Rechner 27 gesteuerten Stellgliedes 30 in Abhängigkeit der Strömungsgeschwindigkeit v verstellbar. Vorzugsweise kann vorgesehen sein, daß die mittlere Pulsfrequenz f des jeweiligen Sendersignales der Zeitlänge $\Delta t_o$ zur jeweils vorangehend ermittelten Strömungsgeschwindigkeit v stetig oder in Stufen geändert wird. Auch andere funktionelle Zusammenhänge sind selbstverständlich realisierbar, falls erwünscht. Wie erwähnt ist $f = n / \Delta t_o$.

Der Funktionsgenerator 31 kann nach unterschiedlichen Programmen arbeiten, wozu er vom Mikroprozessor 24 entsprechend angesteuert werden kann. Bspw. kann eine seiner Arbeitsweisen die sein, daß er mittels eines Zufallgenerators pseudostochastisch Impulse fortlaufend oder nur während den der Strömungsgeschwindigkeitsmessung dienenden Sendersignalen erzeugt. Ein oder mehrere weitere Arbeitsweisen können bspw. darin bestehen, daß er Sendersignale gemäß den Diagrammen nach den Fig. 3 bis 6 oder sonstige Sendersignale erzeugt. Hierdurch kann diese gesamte Einrichtung leicht an stark unterschiedliche Bedarfsfälle angepaßt werden und so für den jeweiligen Anwendungsfall optimale Meßgenauigkeiten erreicht werden.

Die voll ausgezogen dargestellte korrelative Auswerteeinrichtung der Fig. 1 arbeitet wie folgt:

Gesteuert durch eine Uhr des Mikroprozessors 24 steuert und taktet der Funktionsgenerator 31 den Signalgenerator 15 in konstanten oder von der jeweils zuletzt gemessenen Strömungsgeschwindigkeit abhängigen oder in sonstigen Zeitabständen $\Delta t_a$ zur Aussendung von pseudostochastischen oder nichtpseudostochastisch vorbestimmten Sendersignalen konstanter oder von mindestens einem Parameter abhängigen Zeitlängen $\Delta t_o$. Jedes Sendersignal dient der Durchführung einer Einzelmessung der Strömungsgeschwindigkeit des im Rohr 10 strömenden Fluids. Dieses Sendersignal wird dem Sender 13 zum Eintragen von entsprechenden Wärmeimpulsen in das strömende Fluid aufgedrückt und ferner in dem Speicher 21 gespeichert. Während der Zeitdauer dieser Einspeicherung des Sendersignales wird auch das vom Empfänger 14 gefühlte Empfängersignal in den Speicher 22 eingespeichert. Sobald diese Einspeicherung beendet ist, werden diese beiden gespeicherten Signale zur Ermittlung eines ersten Punktes einer Kreuzkorrelationskurve in den Korrelator des Mikroprozessors 24 eingegeben, wobei zunächst die Verzögerungszeit gleich Null ist. Der Korrelator kann die zueinander zeitgleichen Werte dieser beiden gespeicherten Signale digital multiplizieren und die mulitplizierten Werte digital addieren. Die erhaltene Summe bildet dann einen ersten Punkt der Korrelationskurve. Anschließend wird mit einer kurzen Zeitverzögerung des Gliedes 25 das im Speicher 21 gespeicherte Sendersignal rechnerisch zeitverzögert und mit dem weiterhin zeitlich unverzögerten, gespeicherten Empfängersignal wieder in dem Korrelator zur Ermittlung eines zweiten Punktes der zu ermittelnden Korrelationskurve multipliziert und die erhaltenen Werte addiert. Dies wird in sehr rascher Folge zyklisch mit jeweils ständig etwas vergrößerten Zeitverzögerungen wiederholt bis die Korrelationskurve vollständig erhalten ist. Es wird dann ihr Maximum oder ihr höchstes Maximum und die diesem Maximum zugeordnete Verzögerungszeit ermittelt und im Rechner 27 hieraus die Strömungsgeschwindigkeit berechnet. Sobald die Strömungsgeschwindigkeit v im Rechner 27 berechnet ist, wird die mittlere Pulsfrequenz des Impulsgenerators 15 mittels des Stellgliedes 30 erforderlichenfalls neu eingestellt, bspw. auf f = c•v, wo c eine Konstante ist. Nach jeder Einzelmessung kann dann dieser ganze Vorgang sofort oder in vorbestimmtem Zeitabstand zur nächsten Ermittlung der Strömungsgeschwindigkeit wiederholt werden, so daß die Strömungsgeschwindigkeit diskontinuierlich ermittelt wird.

Wenn die Sendersignale so erzeugt werden, daß die jeweilige Kreuzkorrelation mehrere Maxima unterschiedlicher Höhe ergeben kann, was bspw. bei den Sendersignalen nach den Diagrammen 4 bis 6 der Fall ist, wird stets die dem höchsten Maximum zugeordnete Verzögerungszeit für die Berechnung der Strömungsgeschwindigkeit verwendet.

Nach jeder Ermittlung einer Strömungsgeschwindigkeit wird die mittlere Pulsfrequenz des Signalgenerators 15 entsprechend der ermittelten Strömungsgeschwindigkeit erforderlichenfalls neu eingestellt und dann kann die nächste Strömungsgeschwindigkeitsmessung durchgeführt werden.

Die vom Signalgenerator 15 erzeugten Impulse können ggfs. auch von Rechteckimpulsen abweichende Gestalt haben, bspw. Sinuswellen oder Sinushalbwellen sein.

Anstelle des dargestellten, kontinuierlich verlaufenden linearen Senders 13 bzw. Empfängers 14 können der Sender bzw. Empfänger 14 oft auch über eine Durchmesserlinie oder einen Radiusstrahl des betreffenden Querschnittes oder einen anderen geeigneten Abschnitt des betreffenden Querschnittes des Meßrohres 10 oder einen anderen geeigneten Abschnitt der Durchmesserlinie auch diskontinuierlich verlaufen. Bspw. können der Sender bzw. Empfänger durch eine in Reihe geschaltete Kette von punktförmigen oder sonstigen kleinen Heizwiderständen bzw. temperaturempfindlichen Widerständen gebildet sein.

**Ansprüche**

1. Verfahren zum Ermitteln der Strömungsgeschwindigkeit von Fluiden, vorzugsweise von Flüssigkeiten, mittels Laufzeitmessung unter korrelativer Auswertung von in dem Fluid enthaltenen und/oder in es durch einen Sender eingebrachten Wärmeimpulsen, deren Wirkungen im Falle eines Senders an mindestens einem und ohne Sender an mindestens zwei die Fluidtemperatur fühlenden Empfängern gefühlt wird, **dadurch gekennzeichnet** , daß der Sender und der oder die Empfänger bzw. die Empfänger ohne Sender sich kontinuierlich oder diskontinuierlich über zueinander parallele Linien erstrecken, die in Ebenen senkrecht zur Strömungsrichtung der Fluidströmung verlaufen und/oder daß bei Anwendung eines Senders dessen mittlere Pulsfrequenz für die jeweils nächste Messung der Strömungsgeschwindigkeit in Abhängigkeit von der jeweils zuletzt ermittelten Strömungsgeschwindigkeit in vorbestimmter Weise stetig oder in mindestens einer Stufe mit zunehmender Strömungsgeschwindigkeit erhöht und mit abnehmender Strömungsgeschwindigkeit wieder entsprechend erniedrigt wird.

2. Verfahren nach Anspruch 1, dadurch gekennzeichnet, daß die Senderimpulse für eine einzelne Messung der Strömungsgeschwindigkeit periodisch erzeugt werden.

3. Verfahren nach Anspruch 1, dadurch gekennzeichnet, daß ein Sendersignal für die einzelne Messung der Strömungsgeschwindigkeit erzeugt wird, das mindestens eine in vorbestimmter Weise impulsfrequenz-und/oder impulsbreitenmodulierte Impulsgruppe aufweist, oder das pseudostochastisch erzeugt wird.

4. Verfahren nach einem der vorhergehenden Ansprüche, dadurch gekennzeichnet, daß den von den Senderimpulsen im Fluid erzeugten Wärmeimpulsen andere in vorbestimmter Weise, vorzugsweise pseudostochastisch erzeugte Wärmeimpulse überlagert werden.

5. Verfahren nach einem der vorhergehenden Ansprüche, dadurch gekennzeichnet, daß die von mindestens zwei in Strömungsrichtung des Fluids im Abstand hintereinander angeordneten Empfängern gefühlten Empfängersignale korrelativer Auswertung unterworfen werden.

6. Verfahren nach einem der vorhergehenden Ansprüche, dadurch gekennzeichnet, daß das für eine Korrelation verwendete Sendersignal von dem für die nächste Korrelation verwendeten Sendersignal durch eine Pausenzeit getrennt wird, in der vom Sender keine Wärmeimpulse in das Fluid eingetragen werden, wobei die Pausenzeit größer, vorzugsweise vielfach größer als der Reziprokwert der zuletzt angewandten mittleren Senderpulsfrequenz ist.

7. Verfahren nach einem der vorhergehenden Ansprüche, dadurch gekennzeichnet, daß die Zeitlänge von jeweils zwei miteinander zu korrelierenden Sender-und/oder Empfängersignalen in vorbestimmter Weise stetig oder in mindestens einer Stufe mit abnehmender, vorangehend ermittelter Strömungsgeschwindigkeit erhöht und mit zunehmender Strömungsgeschwindigkeit wieder entsprechend erniedrigt wird.

8. Verfahren nach einem der Ansprüche 1 bis 6, dadurch gekennzeichnet, daß die Zeitlängen der zu korrelierenden Signale unabhängig von der Strömungsgeschwindigkeit konstant getroffen werden.

9. Verfahren nach einem der vorhergehenden Ansprüche, dadurch gekennzeichnet, daß die von einem Sender erzeugten Wärmeimpulse von mindestens zwei im Abstand voneinander angeordneten Empfängern unabhängig voneinander empfangen werden und die jeweilige Strömungsgeschwindigkeit als Mittelwert von mehreren durch je eine Korrelation ermittelten Strömungsgeschwindigkeiten ermittelt wird, welche Korrelationen zwischen jeweils unterschiedlichen Paarungen der Sender-und Empfängersignale durchgeführt werden.

10. Verfahren nach einem der vorhergehenden Ansprüche, dadurch gekennzeichnet, daß der Sender in das Fluid die Wärmeimpulse auf einer Linie einträgt, die eine Symmetrielinie des betreffenden, vom Fluid durchströmten Querschnitts des das Fluid leitenden Kanals oder dergl. oder ein Abschnitt einer solchen Symmetrielinie ist und/oder daß die in das Fluid eingetragenen Wärmeimpulse vom betreffenden Empfänger auf einer Linie empfangen werden, die eine Symmetrielinie des betreffenden, vom Fluid durchströmten Querschnittes des das Fluid leitenden Kanales oder dergl. oder ein Abschnitt einer solchen Symmetrielinie ist.

11. Verfahren nach einem der vorhergehenden Ansprüche, dadurch gekennzeichnet, daß die betreffende Linie bzw. Linien, auf der der Sender sendet bzw. auf der oder denen der oder die Empfänger empfangen, sich ungefähr über die betreffenden, vom Fluid durchströmten Querschnitte des das Fluid leitenden Kanals oder dergl. oder über Radiusstrahlen dieser Querschnitte erstrecken.

12. Verfahren nach einem der vorhergehenden Ansprüche, dadurch gekennzeichnet, daß der Sender langsameren Stromfäden höhere Temperatur als schnelleren Stromfäden des Fluids erteilt.

13. Verfahren nach einem der vorhergehenden Ansprüche, dadurch gekennzeichnet, daß die Strömung vor oder innerhalb der Meßstrecke mittels Strömungsgleichrichtern in ihrem Strömungsprofil vergleichmäßigt wird.

14. Verfahren nach einem der vorhergehenden Ansprüche, dadurch gekennzeichnet, daß es zur Ermittlung des Volumenstromes oder Massenstromes für Wärmemengenzählungen in Heizungsanlagen eingesetzt wird.

15. Verfahren nach einem der vorhergehenden Ansprüche, dadurch gekennzeichnet, daß als Senderimpulse Rechteckimpulse verwendet werden.

16. Verfahren nach einem der Ansprüche 1 - 14, dadurch gekennzeichnet, daß als Senderimpulse Sinuswellen verwendet werden.

17. Einrichtung zur Durchführung des Verfahrens nach einem der vorhergehenden Ansprüche, dadurch gekennzeichnet, daß sie in dem die Fluidströmung leitenden Kanal oder dergl. mindestens einen Empfänger (14; 14') zum Fühlen der Temperatur des Fluids stromabwärts eines Senders (13) und/oder eines anderen Empfängers (14) und eine korrelative Auswerteeinrichtung zum korrelativen Auswerten von Sender-und/oder Empfängersignalen zur Ermittlung der jeweiligen Strömungsgeschwindigkeit aufweist, und daß der Sender (13) und/oder der oder die Empfänger (14; 14') entlang zueinander parallelen Linien sich erstrecken, die in Ebenen senkrecht zur Strömungsrichtung der Fluidströmung verlaufen.

18. Einrichtung nach Anspruch 17, dadurch gekennzeichnet, daß der Sender und/oder der oder die Empfänger jeweils ein dünnes linienförmiges Gebilde bilden.

19. Einrichtung nach Anspruch 18, dadurch gekennzeichnet, daß der Sender ein dünner Heizdraht ist.

20. Einrichtung nach Anspruch 17, 18 oder 19, dadurch gekennzeichnet, daß sich der Sender und/oder der Empfänger durch den Innenraum des das Fluid führenden Rohres diametral erstreckt.

21. Einrichtung nach einem der Ansprüche 17 - 20, dadurch gekennzeichnet, daß der Empfänger ein temperaturempfindliches Widerstandselement, vorzugsweise ein Widerstandsdraht ist.

22. Einrichtung nach einem der Ansprüche 17 - 20, dadurch gekennzeichnet, daß der Empfänger mindestens ein lineares Thermoelement (14) aufweist oder ist, dessen einer Werkstoff ein elektrisch isolierter Draht (16) ist, der in einem aus dem anderen Werkstoff des Thermoelemenetes bestehenden Kapillarrohr (17) angeordnet und mit diesem an mindestens einer Stelle elektrisch leitend verbunden, vorzugsweise verschweißt ist, wobei zumindest das Kapillarrohr aus die Wärme gut leitendem Werkstoff besteht, damit dieses Thermoelement die es beaufschlagende Fluidtemperatur über seine Länge mittelt.

23. Einrichtung nach einem der Ansprüche 17 - 22, dadurch gekennzeichnet, daß sich der Sender - (13) und/oder der oder die Empfänger (14) jeweils entlang einer Symmetrielinie des betreffenden Querschnittes des Kanales oder dergl. oder eines Abschnitts einer solchen Symmetrielinie erstreckt bzw. erstrecken.

FIG.1

FIG.2

FIG.3

FIG.4

FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-A-3 106 530 (P.W. BAIER et al.)<br>* Seite 6; Seite 8, Zeilen 24-33; Figur 1 * | 1,5,17 -19,21 | G 01 P 5/18 |
| A | | 3,8,15 | |
| | --- | | |
| Y | DE-A-3 234 146 (W. KROEBEL)<br><br>* Seite 3, Zeile 23 - Seite 4, Zeile 10; Figuren 1a,1b * | 1,5,17 -19,21 | |
| A | | 10-12, 20,23 | |
| | --- | | RECHERCHIERTE SACHGEBIETE (Int. Cl.4) |
| Y | JOURNAL OF PHYSICS E. SCIENTIFIC INSTRUMENTS, Band 3, Nr. 8, August 1970, Seiten 589-593, London, GB; K.P. TERMAAT: "Fluid flow measurements inside the reactor vessel of the 50 MWe Dodewaard nuclear power plant by cross-correlation of thermocouple signals"<br>* Zusammenfassung Seite 589; Figuren 1-3,6 * | 5 | G 01 P<br>G 01 F |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 18-05-1987 | HANSEN P. |

Europäisches
Patentamt

**EUROPÄISCHER RECHERCHENBERICHT**

Nummer der Anmeldung

EP 87 10 0251

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | TECHNISCHES MESSEN ATM, Band 45, Nr. 4, April 1978, Seiten 129-133, München, DE; K. LICKTEIG: "Strom- und Spannungsverstärker bei der Korrelationsanalyse von Temperatursignalen bei Gegenwart elektrischer und magnetischer Störfelder" * Seite 131, Kapitel 2.3; Figuren 2,5,6 * | 1-3,5, 6,8,15 | |
| A | PROCEEDINGS OF MELECON '85, Madrid, 8.-10. Oktober 1985, Band II, Seiten 523-530, Elsevier Science Publishers B.V., NL; D.E. VENTZAS: "Design of transducers for thermal cross-correlation flowmeter" * Seite 523; Figuren 1,2,5 * | 1,2,5, 22 | |
| A | US-A-4 483 200 (T. TOGAWA et al.) * Spalte 3, Zeile 22 - Spalte 4, Zeile 25; Figuren 1,7,10 * | 1,2,7, 15 | |

RECHERCHIERTE SACHGEBIETE (Int. Cl.4)

--- -/-

Der vorliegende Recherchenbericht wurde für alle Patentansprüche erstellt.

| Recherchenort | Abschlußdatum der Recherche | Prüfer |
|---|---|---|
| DEN HAAG | 18-05-1987 | HANSEN P. |

| | Europäisches Patentamt | **EUROPÄISCHER RECHERCHENBERICHT** | Nummer der Anmeldung |

EP 87 10 0251

Seite 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | TRANSACTIONS OF THE SOCIETY OF INSTRUMENT TECHNOLOGY, Band 18, September 1966, Seiten 183-192, Londen, GB; P.G. BENTLEY et al.: "Fluid flow measurement by transit time analysis of temperature fluctuations" * Seite 185, Spalte 2, Zeile 24; Figur 3 * | 1,5,16 | |
| | --- | | |
| A | US-A-4 237 730 (C.L. FENG) * Spalte 7, Zeilen 32-56; Figur 6 * | 13 | |
| | ----- | | |
| | | | **RECHERCHIERTE SACHGEBIETE (Int. Cl.4)** |

Der vorliegende Recherchenbericht wurde für alle Patentansprüche erstellt.

| Recherchenort DEN HAAG | Abschlußdatum der Recherche 18-05-1987 | Prüfer HANSEN P. |
|---|---|---|